# FASCICULE DE BREVET EUROPEEN

(11) **EP 2 670 662 B1**
(45) Date de publication et mention de la délivrance du brevet: **17.06.2015**
(21) Numéro de dépôt: 12701153.4
(22) Date de dépôt: 30.01.2012
(51) Int. Cl.: B64D 11/06, B60N 2/68

(54) **SIEGE ULTRALEGER POUR AERONEF**
SEHR LEICHTGEWICHTIGER SITZ FÜR FLUGZEUGE
ULTRA LIGHTWEIGHT SEAT FOR AIRCRAFT

(30) Priorité: 01.02.2011 FR 1100305
(43) Date de publication de la demande: 11.12.2013
(73) Titulaire: Expliseat, 75006 Paris (FR)
(72) Inventeur: SAADA, Benjamin, Jacob, F-13007 Marseille (FR); SAMUELIAN, Jean-Charles, Marcel, F-75005 Paris (FR); TEJEDOR, Vincent, F-78500 Sartrouville (FR)
(74) Mandataire: Ahner, Philippe
(86) Numéro de dépôt international: PCT/EP2012/051441
(87) Numéro de publication internationale: WO 2012/104248

(56) Documents cités:
- EP-A2- 1 946 962
- FR-A- 1 144 425
- US-A1- 2003 173 815
- US-A1- 2008 290 715

## Description

### DOMAINE TECHNIQUE

La présente invention appartient au domaine de la fabrication d'aménagements de cabines d'aéronefs, pour l'aviation générale, l'aviation commerciale ou l'avion militaire. Elle concerne plus particulièrement la réalisation d'un siège pour aéronef, supportant un ou plusieurs passagers.

### ÉTAT DE LA TECHNIQUE ANTÉRIEURE

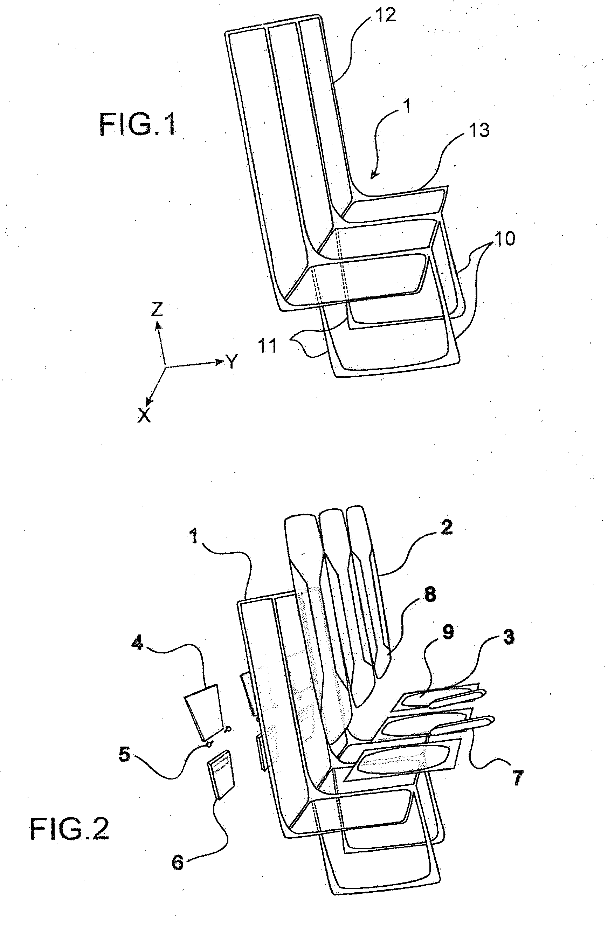

Les sièges d'aéronefs doivent répondre à des normes particulières, notamment en terme de résistance aux chocs. Un essai dynamique de résistance aux crashs soumet par exemple le siège à des accélérations de 16 g selon l'axe longitudinal de l'aéronef (axe Y de la figure 1), 3 g suivant l'axe perpendiculaire dans le plan horizontal de l'aéronef (axe X de la figure 1) et 14 g suivant l'axe vertical de l'aéronef (axe Z de la figure 1), où g est l'accélération de l'apesanteur (g ≈ 9,81 m.s⁻²).

Pour répondre à ces contraintes, les sièges d'aéronefs destinés aux passagers ont été réalisés à l'aide d'un grand nombre de pièces, généralement en métal. Ces structures métalliques sont relativement solides, et confèrent ainsi une grande résistance aux sièges en cas de chocs. Mais les structures métalliques sont denses et, rendent les sièges particulièrement lourds.

Les sièges traditionnels sont pourvus d'une assise et d'un dossier, généralement réalisés à l'aide de coussins de mousse positionnés sur une partie rigide en métal. La partie rigide tout comme les épaisseurs de mousse contribuent à augmenter le poids du siège.

En sus du dossier et de l'assise, le siège est pourvu de multiples accessoires, tels la ceinture de sécurité, les accoudoirs, les plateaux pliables, les présentoirs de magazines ou d'instructions de sécurité. Beaucoup de ces accessoires sont arrimés au siège en utilisant des structures métalliques. Ces accessoires augmentent encore le poids des sièges.

La conception moderne de sièges d'aéronef cherche à diminuer le poids, le volume et la complexité du siège, tout en respectant les normes en vigueur. En effet, quand l'aéronef contient une centaine de sièges, la part des sièges dans le poids total de l'aéronef peut être importante, et le volume qu'ils occupent n'est pas commercialisable.

Le poids est un problème de plus en plus prégnant dans la conception de sièges d'aéronefs, à la fois pour des raisons économiques et pour des raisons environnementales. Une réduction du poids unitaire des sièges induit une diminution du poids total de l'aéronef. L'aéronef peut ainsi diminuer sa consommation de carburant, la taille de son réservoir et la puissante de ses moteurs, ou à l'inverse augmenter son rayon d'action. Au point de vue environnemental, la diminution du poids des sièges est très importante : elle permet, à avion constant, de diminuer la quantité de carburant consommée, et de diminuer ainsi le rejet de dioxyde de carbone (CO₂) ou d'oxydes d'azote (NOₓ) dans l'atmosphère.

Le volume des sièges est une seconde préoccupation, qui cherche à répondre à l'augmentation du nombre de passagers transportés chaque année. En réduisant le volume unitaire des sièges, il est possible de diminuer l'espacement entre deux rangées de sièges, et d'augmenter le nombre de passagers pouvant prendre place au sein de l'aéronef, ou à l'inverse, d'augmenter l'espace dévolu à chaque passager ou celui dévolu aux marchandises. Un meilleur remplissage de l'aéronef permet, à flux de passagers constant sur une ligne aérienne, de diminuer le nombre de vols : le carburant économisé réduit d'autant les rejets de gaz à effet de serre.

La complexité du siège soulève plusieurs problèmes, lors de la fabrication, de son entretien, ou pour le suivi des différentes pièces. Plus le nombre de pièces composant le siège d'aéronef est élevé, plus la logistique et le processus de fabrication de ce siège sont complexes et coûteux. Les fixations de ces différentes pièces entre elles sont souvent métalliques (typiquement en acier inoxydable), pour satisfaire aux normes de sécurité, et alourdissent le siège. Une réduction du nombre de pièces permet ainsi une diminution du volume et du poids du siège.

Par ailleurs, ces sièges intègrent historiquement des fonctions coûteuses, en poids et en valeur, qui ne sont plus adaptées aux configurations des cabines actuelles : l'inclinaison du dossier, par exemple, n'est plus utilisable quand l'espace entre les rangées de sièges est réduit. Les sièges d'aéronefs doivent adapter le confort offert aux besoins de compagnies aériennes.

L'assise ou le dossier des sièges d'aéronefs comportent un coussin qui peut être difficilement nettoyable. L'ajout du coussin sur le siège d'aéronef contribue à l'augmentation du poids de l'avion, à l'augmentation du temps de nettoyage des sièges entre les vols, et diminue l'hygiène à bord de l'aéronef.

WO 8502384 décrit une structure de sièges d'avion composée au minimum de deux parties en utilisant de la fibre de carbone et non de l'acier pour réduire le poids du siège sans diminuer sa résistance aux chocs. WO 2007136578 propose d'utiliser des matériaux composites, moins onéreux que la fibre de carbone, toujours dans le but de réduire le poids du siège. Enfin, WO 2010112875 propose de réduire le nombre d'attaches dans la structure du siège en moulant un squelette composé de plusieurs pièces dans des matériaux composites.

Les sièges décrits dans ces documents de brevets cherchent à réduire de façon peu onéreuse le poids du siège, mais proposent toujours un siège impliquant la réalisation ou l'utilisation de plusieurs pièces et ne présentant pas une structure sur laquelle le passager peut s'assoir directement.

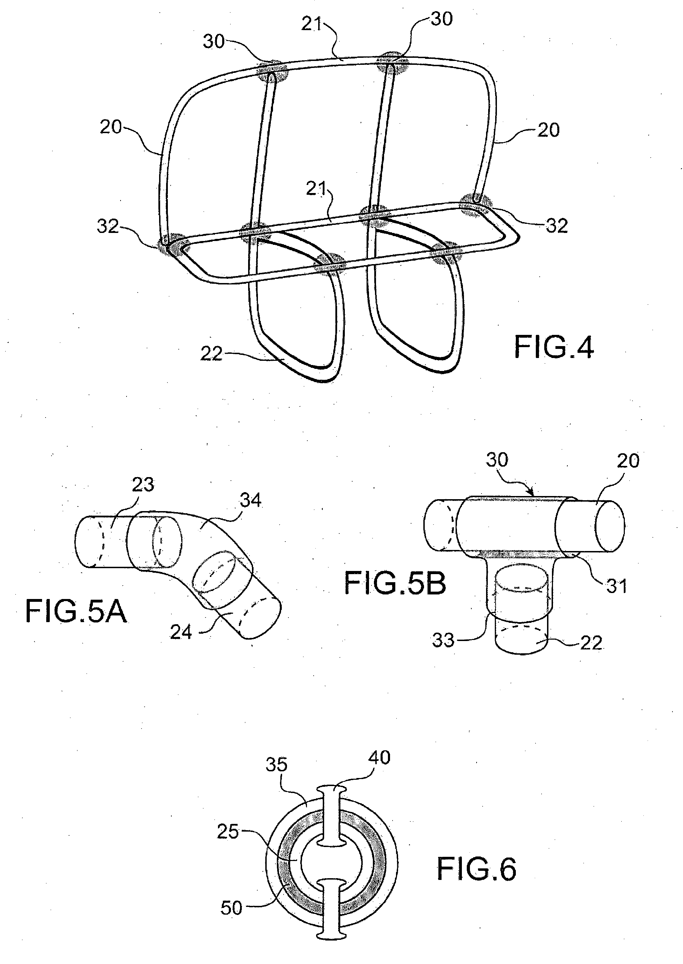

On cite également les documents EP 0 982 180, EP 1 946 962, US 2008/088166 et surtout US 2003/173 815 A1 qui représente l'art antérieur par rapport auquel la portée de l'invention a été définie. Il décrit un siège pour passagers d'aéronef comprenant un squelette 3 comprenant des pieds (voir figure 4) adaptées pour être fixés au plancher de l'aéronef et une armature, au moins un dossier 5, et au moins une assise, le au moins un dossier et la au moins une assise étant solidarisés tous deux à l'armature du squelette, où le squelette est rigide, tubulaire et en matière plastique ; le squelette étant constitué des plusieurs tubes 6b, 7b fixés entre eux par des pièces de jonctions 65.

La présente invention propose ainsi un siège à structure rigide de très faible poids. Les objectifs de ce siège sont d'allier le confort du passager, notamment l'assise et le dossier, et la résistance mécanique, afin de respecter les normes en vigueur dans le transport de passagers par voie aérienne. On souhaite que le passager puisse s'assoir directement sur le siège, sans ajout de pièces supplémentaires.

### EXPOSÉ DE L'INVENTION

La présente invention a été conçue dans l'esprit des problématiques citées ci-dessus : simplification de la conception du siège, diminution de son poids et de son volume, respect de l'environnement.

A cet effet, un premier objet principal de l'invention est un siège pour passagers d'aéronef comprenant :
- un squelette comprenant des pieds fixés au plancher de l'aéronef, et une armature ;
- au moins un dossier, et
- au moins une assise,
le au moins un dossier et la au moins une assise étant solidarisés tous deux à l'armature du squelette.

Selon l'invention, le squelette est rigide, de conception tubulaire et est en matière plastique, et il est constitué de plusieurs tubes fixés entre eux par des pièces de jonction constituées de bagues rigides entourant les extrémités des tubes à fixer.

Une réalisation préférentielle de l'invention prévoit que la matière plastique du squelette est une résine polyétherimide.

Dans une réalisation préférentielle du siège selon l'invention, le squelette est renforcé de fibres composées d'un matériau du groupe comprenant le carbone, le verre et les fibres végétales.

Dans une première conception du siège, le squelette est monobloc.

Dans ce cas, un procédé de réalisation du squelette selon l'invention est le rotomoulage.

Les bagues peuvent être métalliques ou réalisées à l'aide de matériaux composites.

Dans les deux cas, les bagues peuvent être réalisées par injection, soit de métal, soit de matrice thermodurcissable chargée en fibres composées d'un matériau du groupe comprenant le carbone, le verre et les fibres végétales.

Un procédé de fabrication du squelette consiste à utiliser le moulage par vessie gonflable, les fibres de carbone étant présentées sous la forme de tresses.

Un autre procédé de réalisation du squelette selon l'invention est l'extrusion/cintrage.

Dans une réalisation préférentielle du siège selon l'invention, le dossier et l'assise sont de faible épaisseur, c'est-à-dire de l'ordre du millimètre, et arrimés sur le squelette rigide.

Dans le procédé selon l'invention, lorsqu'on n'utilise pas le rotomoulage, le dossier et l'assise sont surmoulés sur le squelette.

Le siège selon l'invention remplit plusieurs fonctions : résistance dynamique aux chocs et aux fortes accélérations, confort du passager avec l'assise et le dossier du passager, et le support de divers accessoires (tablettes pliables, range-revues, accoudoirs, ...) .

La première fonction du siège est la résistance structurale. Le siège selon l'invention a une structure relativement simple : une façon d'augmenter la résistance du siège est en effet de rigidifier la structure en ne permettant plus une articulation entre le dossier et l'assise. La structure du squelette en un seul élément rigide permet ainsi une circulation des contraintes dans tout le siège, sans point de faiblesse lié à une articulation. La partie structurale peut ainsi être allégée.

Les points de faiblesse traditionnels au niveau des angles dossier/assise sont renforcés en utilisant des arcs de cercle au moyen des bagues rigides coudées, métalliques ou en matériau composite, ou des tubes pliés ou rotomoulés, au lieu d'utiliser des angles droits. Les efforts sont ainsi drainés sur tout l'arc de cercle au lieu de se concentrer au niveau de l'angle. Le squelette du siège selon l'invention permet de limiter l'affaissement du dossier, lors de décélération, choc ou accélération suivant l'axe longitudinal de l'aéronef en étant directement relié par les pieds à la carcasse de l'aéronef. En opérant ainsi, on limite les efforts drainés par l'angle entre le dossier et l'assise du siège.

La seconde fonction est le confort et l'accueil du passager. Le dossier et l'assise du siège sont des parties directement en contact avec le passager et peuvent ne pas participer à la résistance structurale du siège, ou, tout le moins, de façon limitée. Le squelette du siège étant constitué d'un seul tenant, l'assise et le dossier sont solidarisés à ce squelette et peuvent ainsi être beaucoup plus fins afin de minimiser le poids total du siège. En étant en contact direct avec le passager, l'assise et le dossier doivent être confortables, facilement lavables et suffisamment rugueux. La facilité de lavage s'obtient en utilisant un recouvrement de matériaux hydrofuges.

Une option dans la réalisation du siège selon l'invention consiste à prévoir une rugosité sur l'assise. En effet, si le matériau constituant l'assise est hydrofuge et glissant, le risque est que le passager n'adhère pas suffisamment au siège et soit déporté sans cesse vers l'avant lors des décélérations de l'aéronef. Pour éviter cet inconfort, des stries peuvent être usinées au niveau de l'assise afin d'augmenter sa rugosité (stries de l'ordre du millimètre en largeur et du dixième de millimètre en profondeur). Les arêtes des stries sont émoussées après usinage pour éviter des risques de coupure du passager.

La dernière fonction du siège d'aéronef est la fixation de divers accessoires, tels la ceinture de sécurité, les accoudoirs, les plateaux pliables, les présentoirs de magazines ou d'instructions de sécurité. Pour ces éléments, la technique de surmoulage peut être utilisée. L'accessoire est réalisé en utilisant un profilé très fin ou un affinage du matériau jusqu'à des épaisseurs de l'ordre du millimètre, puis arrimé sur le squelette rigide.

Pour les accessoires articulés, tels la table pliable ou l'accoudoir, seul l'axe de rotation doit être arrimé au squelette, l'accessoire se fixant ensuite à cet axe de rotation qui doit être le plus léger possible : un support creux, d'épaisseur très fine, et situé le plus près possible du squelette permet de limiter son poids, en limitant le bras de levier exercé par l'accessoire.

### PRESENTATION DES FIGURES

Figure 1 : vue en perspective du squelette du siège moulé en un seul élément, selon l'invention, et repère orthogonal direct utilisé.
Figure 2 : vue éclatée en perspective d'un siège selon l'invention avec un squelette moulé et ses différents accessoires surmoulés.
Figure 3 : vue éclatée de dos du siège selon l'invention de la figure 2.
Figure 4 : le squelette du siège selon l'invention dans sa réalisation avec des tubes assemblés.
Figures 5A et 5B, deux exemples de réalisation de pièces de jonction pour la réalisation du squelette du siège selon l'invention avec des tubes assemblés.
Figure 6 : vue en coupe d'une jonction entre deux tubes avec un manchon optionnel.

### DESCRIPTION DE L'INVENTION ET DE SES MODES DE FABRICATION

La figure 1 montre une réalisation du squelette 1 du siège selon l'invention, formé d'une structure tubulaire creuse. Les points d'attache sont situés sur la partie du squelette liée au plancher de l'aéronef. Les angles sont systématiquement arrondis en arc de cercle, même légèrement. Les parties basses des tubes verticaux avant 10 et arrière 11 constituent les pieds du siège et sont directement reliés au point d'attache de celui-ci au plancher de l'aéronef. La partie haute des tubes verticaux arrière 11 constitue la partie dorsale 12 du squelette 1 du siège. L'armature est complétée par une partie d'assise 13. Sur cette figure 1, c'est un siège à trois places qui a été représenté, seulement deux montants verticaux avant 10 et deux montants verticaux arrière 11 étant nécessaires et encadrant le siège du milieu. Dans ce cas, les sièges de côté sont en porte à faux.

Le matériau choisi doit respecter les normes en vigueur en termes de toxicité, d'inflammabilité et de transmission de chaleur. C'est une matière plastique choisie parmi les résines polymères thermodurcissables, telle la résine époxy, ou thermoplastiques, telle une résine de polyétherimide (PEI). Dans le cas où le matériau doit être moulé, on peut utiliser une résine thermoplastique telle celle de polyétherymide (PEI) par exemple, renforcée ou non par des fibres, qui satisfait à ces contraintes. Le diamètre des tubes formant un tel squelette 1 est de l'ordre du centimètre, l'épaisseur des tubes la constituant est de l'ordre de quelques millimètres.

Pour fabriquer un tel squelette 1, un premier procédé selon l'invention est le rotomoulage. La résine polymère constituant la matrice du matériau est réduite en poudre et est disposé au sein d'un moule. Des fibres courtes, de carbone, et/ou de plastique et/ou végétale, telle que du chanvre, peuvent être ajoutées à la poudre pour renforcer le squelette. Le moule est ensuite mis en rotation autour de trois axes de rotation formant un trièdre. Un chauffage permet de faire fondre la poudre, qui s'agglomère sur les bords du moule de façon homogène, enserrant éventuellement les fibres au sein de la matrice, formant ainsi une structure creuse.

Pour accroître encore la résistance du squelette 1, certaines parties ne doivent pas présenter de discontinuités : il s'agit de celles situées dans le plan contenant un axe vertical (Z) et l'axe longitudinal de l'aéronef (Y). Un de ces plans contient une des barres tubulaires, par exemple le tube vertical arrière 11, reliant la partie dorsale 12 au point d'attache du squelette 1 au plancher de l'aéronef. La rigidité du squelette 1 par rapport à l'axe longitudinal de l'aéronef (Y) est cruciale pour la tenue du siège, entre autre aux tests de résistance dynamique.

La figure 2 montre un exemple de siège à trois places selon l'invention, de façon légèrement éclatée. On y distingue en plus les dossiers 2 et les assises 3 qui vont être fixés sur le squelette 1. Ces parties sont très fines et présentent des motifs striés permettant d'augmenter leur rugosité. Les dossiers 2 et les assises 3 sont réalisés, de préférence dans le même matériau que le squelette 1, par exemple en résine polyétherimide, d'épaisseur de l'ordre du millimètre. Ces éléments sont, dans un premier temps recoupés pour obtenir la forme désirée, puis mis en forme à chaud : un creux est réalisé dans le dossier 2. Les stries ou micro-stries sont réalisées par incision au niveau de l'assise 3 pour accroître sa rugosité, puis émoussées par ponçage. Les dossiers 2 et lès assises 3 sont fixés sur le squelette 1 par surmoulage au niveau de leurs bords.

Un traitement additionnel peut être réalisé au niveau des assises 3 et des dossiers 2, en les recouvrant d'un matériau plus mou, tels des dérivés siliconés hydrofuges, afin d'accroître le confort du siège. Ce traitement de surface doit être relativement fin, de quelques millimètres à un centimètre d'épaisseur, afin de ne pas trop grever le poids total du siège.

Un creux 8, 9 peut être réalisé dans le bas des dossiers 2 et sur l'assise, afin d'obtenir un siège confortable et ergonomique.

Les accessoires sont arrimés de la même manière sur le siège par surmoulage. Dans un premier temps, l'accessoire est mis en forme à partir d'un profilé de polyétherimide ou de dérivés siliconés, éventuellement traité en surface pour un contact plus agréable, puis fixé au siège par surmoulage. Il en est ainsi pour des porte-revues 6 placés sur la partie dorsale ou arrière des dossiers 2, des accoudoirs 7 ou pour les axes de rotation 5 de tables pliantes 4 placées à l'arrière du siège. Une telle tablette pliante 4 peut également être réalisée en polyétherimide pour un gain supplémentaire de poids. L'arrimage des accessoires peut se faire dès l'étape initiale de fabrication des éléments constitutifs du siège afin que des lamelles soutenant ces accessoires soient reliées au coeur de la structure constituant ces éléments.

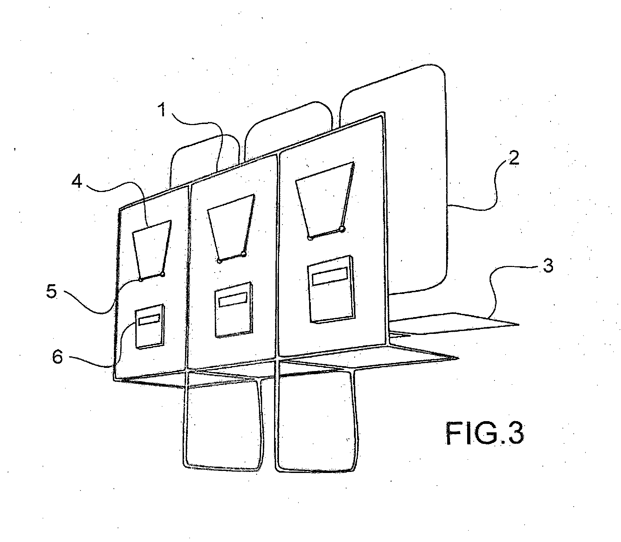

La figure 3 montre tous ces alignements constitutifs du siège, toujours de façon légèrement éclatée.

Un autre procédé de fabrication du squelette 1 du siège est le moulage par vessie gonflable (bladder inflation molding). Un tel procédé permet de renforcer les tubes moulés en insérant, une tresse cylindrique de composite, comprenant une matrice polymère, tel une résine de polyétherimide, et des fibres, de carbone, et/ou de plastique et/ou végétale, telle que du chanvre, dans le moule. Une vessie est positionnée à l'intérieur de la tresse et le tout est placé dans le moule. Une fois la vessie gonflée, le moule est chauffé alors que la tresse est plaquée contre le moule chaud. La résine polymère de la tresse fond et forme une matrice autour des fibres de renfort. La matrice se solidifie quand le moule redescend en température. Ainsi, il est possible de fabriquer un squelette renforcé du siège selon l'invention.

Un troisième procédé de réalisation d'un tel squelette est l'emploi du procédé d'extrusion-cintrage qui aboutit à un résultat analogue à celui du procédé de moulage par vessie gonflable. Dans un tel procédé, le tube est extrudé, c'est-à-dire que la résine polymère est réduite à l'état de pâte, éventuellement chargée en fibre, et étirée à travers un filtre pour obtenir un motif qui est celui du filtre, répété sur une grande longueur. Cette étape est relativement classique dans l'industrie du plastique pour obtenir des grandes longueurs de tubes. La seconde étape, le cintrage, consiste à chauffer localement le tube afin d'approcher la température de transition vitreuse, et ramollir le matériau. Une torsion peut être alors appliquée à l'aide de trois poulies, permettant ainsi de courber le tube et de le mettre en forme.

Ce procédé peut également permettre de fabriquer des morceaux du squelette du siège selon l'invention en fabriquant plusieurs tubes pour un seul siège, des tubes plus ou moins droits et des tubes cintrés.

La figure 4 montre un exemple de réalisation du squelette du siège selon l'invention avec l'assemblage de plusieurs tubes 20, 21 et 22. Ils sont assemblés par des pièces de jonction 30, 32. Les tubes 20 sont courbés, c'est-à-dire pliés, par exemple en utilisant le procédé ci-dessus d'extrusion-cintrage. Les tubes 21 sont plus droits, tandis que les tubes 22, constituant les pieds du squelette, sont courbés à trois endroits. Les pièces de jonction 30 et 32 peuvent avoir des configurations différentes selon les assemblages à réaliser. Les pièces de jonction 30 réalisent un assemblage de deux tubes dans un même plan. Une telle pièce de jonction est représentée en détail à la figure 5B. Elle relie donc un tube relativement droit 20 constituant la partie centrale haute des trois sièges à un tube vertical 22 constituant la partie dorsale des sièges latéraux. Une partie perpendiculaire 33 est reliée à une liaison principale 31. Les deux parties 31 et 33 d'une telle pièce de jonction double 30 enserrent l'extrémité du tube libre 22 et encerclent une partie plus ou moins centrale de l'autre tube 20.

En référence à la figure 5A, il est possible de réaliser des pièces de jonction simples 34 ne reliant que deux tubes 23 et 24 entre eux, mais coudée.

Toutes ces pièces de jonction sont constituées, de préférence, de métal et sont donc plus denses que les tubes qu'elles relient. Elle peuvent alternativement être réalisées en matériau composite, de la même façon que le squelette. Dans les deux cas, les bagues peuvent être réalisées par injection, soit de métal, soit de matrice thermodurcissable chargée en fibres composées d'un matériau du groupe comprenant le carbone, le verre et les fibres végétales. Les jonctions ainsi obtenues permettent d'absorber les vibrations provenant du sol et limitent l'inconfort du passager. On note que la tenue de la jonction sera d'autant plus importante que la zone de recouvrement entre les tubes et ces pièces de jonction sera grande.

En référence à la figure 6, la fixation entre les tubes et les pièces de jonction peut être soit mécanique, à l'aide d'une vis ou d'un rivet traversant le tube et la pièce de jonction au niveau du recouvrement, soit chimique, en utilisant un adhésif au niveau du recouvrement.

Un élément amortisseur peut être inséré au milieu de la jonction. Il peut être constitué d'un manchon 50 en mousse polyuréthane, inséré entre le tube 25 et la pièce de jonction 35. La fixation se fait toujours entre la pièce de jonction 35 et les tubes 25, par exemple par vis ou par un rivet 40 qui traverse les trois éléments. Des fixations chimiques peuvent être également utilisées.

Le siège d'aéronef selon l'invention permet donc une grande économie de poids du fait de la faible densité de toute la structure par rapport à une structure conventionnelle. Il est particulièrement destiné au transport de civils par aéronefs en catégorie économique.

## Revendications

1. Siège pour passagers d'aéronef comprenant :
- un squelette (1) comprenant des pieds (10) adaptés pour être fixés au plancher de l'aéronef et une armature (12) ;
- au moins un dossier (2), et
- au moins une assise (3),
le au moins un dossier et la au moins une assise étant solidarisés tous deux à l'armature (12) du squelette (1),
le squelette (1) étant rigide, tubulaire et en matière plastique, constitué de plusieurs tubes (20, 21, 22, 23, 24) fixés entre eux par des pièces de jonction (30, 32, 34, 35), **caractérisé en ce que** les pièces de jonction sont constituées de bagues rigides entourant les extrémités des tubes à fixer.

2. Siège selon la revendication 1, **caractérisé en ce que** la matière plastique est un polymère thermoplastique tel que la résine de polyétherimide.

3. Siège selon la revendication 1, **caractérisé en ce que** la matière plastique est un polymère thermodurcissable tel que la résine epoxy.

4. Siège selon l'une quelconque des revendications précédentes, **caractérisé en ce que** le squelette (1) est renforcé de fibres de matériaux du groupe comprenant le carbone, le verre et les végétaux.

5. Siège selon la revendication 1, **caractérisé en ce que** les pièces de jonction (30, 32) sont constituées de bagues métalliques.

6. Siège selon la revendication 5, **caractérisé en ce que** les bagues métalliques sont réalisées par injection de métal.

7. Siège selon la revendication 1, **caractérisé en ce que** les pièces de jonction (30, 32) sont constituées de bagues en matériau composite.

8. Siège selon la revendication 7, **caractérisé en ce que** les bagues en matériau composite sont réalisées par injection d'une matrice thermodurcissable chargée en fibres composées d'un matériau du groupe, comprenant le carbone, le verre et les fibres végétales.

9. Siège selon la revendication 1 ou 2, **caractérisé en ce que** le au moins un dossier (2) et la au moins une assise (3) sont de faible épaisseur, de l'ordre du millimètre, et arrimés sur le squelette (1).

10. Siège selon la revendication 4, caractérisé en ce le squelette (1) est réalisé par moulage par vessie gonflable, le plastique étant renforcé par des tresses de fibres de matériaux compris dans le groupe constitué du carbone, du verre et des végétaux.

11. Siège selon l'une des revendications 4 ou 5, **caractérisé en ce que** le squelette (1) est réalisé par extrusion/cintrage.

12. Siège selon l'une des revendications 10 ou 11, **caractérisé en ce que** le au moins un dossier (2) et la au moins une assise (3) sont surmoulés au squelette (1).

## Patentansprüche

1. Sitz für Passagiere eines Luftfahrzeugs, umfassend:
- ein Skelett (1), umfassend Füße (10), die dazu ausgelegt sind, am Fußboden des Luftfahrzeugs befestigt zu sein, sowie ein Gerüst (12);
- wenigstens eine Rückenlehne (2), und
- wenigstens eine Sitzfläche (3),
wobei die wenigstens eine Rückenlehne und die wenigstens eine Sitzfläche beide mit dem Gerüst (12) des Skeletts (1) verbunden sind,
wobei das Skelett (1) starr, röhrenförmig und aus Kunststoffmaterial und aus mehreren Rohren (20, 21, 22, 23,2 4) gebildet ist, welche miteinander durch Verbindungsstücke (30, 32, 34, 35) befestigt sind, **dadurch gekennzeichnet, dass** die Verbindungsstücke durch starre Muffe gebildet sind, die die Enden der zu befestigenden Rohre umgeben.

2. Sitz nach Anspruch 1, **dadurch gekennzeichnet, dass** das Kunststoffmaterial ein thermoplastisches Polymer wie zum Beispiel Polyetherimid-Harz ist.

3. Sitz nach Anspruch 1, **dadurch gekennzeichnet, dass** das Kunststoffmaterial ein hitzehärtbares Polymer wie zum Beispiel Epoxidharz ist.

4. Sitz nach einem der vorhergehenden Ansprüche, **dadurch gekennzeichnet, dass** das Skelett (1) verstärkt ist mit Fasern eines Materials aus der Gruppe umfassend Kohlenstoff, Glas und Pflanzen.

5. Sitz nach Anspruch 1, **dadurch gekennzeichnet, dass** die Verbindungsstücke (30, 32) aus Metallringen gebildet sind.

6. Sitz nach Anspruch 5, **dadurch gekennzeichnet, dass** die Metallringe durch Metallgießen hergestellt sind.

7. Sitz nach Anspruch 1, **dadurch gekennzeichnet, dass** die Verbindungsstücke (30, 32) durch Ringe aus Verbundmaterial gebildet sind.

8. Sitz nach Anspruch 7, **dadurch gekennzeichnet, dass** die Ringe aus Verbundmaterial hergestellt sind durch Spritzen einer hitzehärtbaren Matrix, die mit Fasern gefüllt ist, die aus einem Material aus der Gruppe umfassend Kohlenstoff, Glas und Pflanzenfasern zusammengesetzt sind.

9. Sitz nach Anspruch 1 oder 2, **dadurch gekennzeichnet, dass** die wenigstens eine Rückenlehne (2) und die wenigstens eine Sitzfläche (3) eine geringe Dicke in der Größenordnung eines Millimeters haben und an dem Skelett (1) befestigt sind.

10. Sitz nach Anspruch 4, **dadurch gekennzeichnet, dass** das Skelett (1) durch Formen mit einem aufblasbaren Balg hergestellt ist, wobei der Kunststoff verstärkt ist durch Tressen von Fasern aus Materialien, die enthalten sind in der Gruppe gebildet aus Kohlenstoff, Glas und Pflanzen.

11. Sitz nach einem der Ansprüche 4 oder 5, **dadurch gekennzeichnet, dass** das Skelett (1) durch Extrusion/Biegen hergestellt ist.

12. Sitz nach einem der Ansprüche 10 oder 11, **dadurch gekennzeichnet, dass** die wenigstens eine Rückenlehne (2) und die wenigstens eine Sitzfläche (3) an dem Skelett (1) überformt sind.

## Claims

1. A seat for aircraft passengers including:
- a structure (1) including feet (10) adapted to be attached to the floor of the aircraft, and an armature (12);
- at least one back (2), and
- at lease one base (3),
where the at least one back and the at least one base are both securely attached to the armature (12) of the structure (1),
the structure (1) being rigid, tubular and made of plastic, and consisting of several tubes (20, 21, 22, 23, 24) attached to one another by joining parts (30, 32, 34, 35) ; **characterised in that** the joining parts are constituted by rigid bushings surrounding the ends of the tubes to be attached.

2. A seat according to claim 1, **characterised in that** the plastic is a thermoplastic polymer such as polyetherimide resin.

3. A seat according to claim 1, **characterised in that** the plastic is a thermohardening polymer such as epoxy resin.

4. A seat according to anyone of the preceding claims, **characterised in that** the structure (1) is strengthened with fibres of materials of the group including carbon, glass and plants.

5. A seat according to claim 1, **characterised in that** the joining parts (30, 32) consist of metal bushings.

6. A seat according to claim 5, **characterised in that** the metal bushings are produced by injection of metal.

7. A seat according to claim 1, **characterised in that** the joining parts (30, 32) consist of bushings made of composite material.

8. A seat according to claim 7, **characterised in that** the bushings made of composite material are produced by injection of a thermohardening matrix filled with fibres consisting of a material of the group including carbon, glass and plant fibres.

9. A seat according to claim 1 or 2, **characterised in that** the at least one back (2) and the at least one base (3) are thin, of the order of one millimetre thick, and fastened to the structure (1).

10. A seat according to claim 4, **characterised in that** the structure (1) is produced by bladder inflation moulding, where the plastic is strengthened by strands of fibres of materials included in the group constituted of carbon, glass and plants.

11. A seat according to claim 4, **characterised in that** the structure (1) is produced by extrusion/bending.

12. A seat according to claim 10, **characterised in that** the at least one back (2) and the at least one base (3) are overmoulded on to the structure (1).
